# EUROPEAN PATENT SPECIFICATION

(11) **EP 2 193 346 B1**
(45) Date of publication and mention of the grant of the patent: **30.11.2011**
(21) Application number: 08807806.8
(22) Date of filing: 25.09.2008
(51) Int. Cl.: G01G 17/00, G01G 15/00

(54) **METHOD FOR WEIGHING IN A MACHINE FOR FILLING CONTAINERS**
WIEGEVERFAHREN FÜR EINE MASCHINE MIT CONTAINERBEFÜLLUNG
PROCÉDÉ DE PESAGE DANS UNE MACHINE POUR REMPLIR DES CONTENEURS

(30) Priority: 27.09.2007 IT BO20070660
(43) Date of publication of application: 09.06.2010
(73) Proprietor: Romaco S.R.L., 40067 Pianoro Fraz. Rastignano (BO) (IT)
(72) Inventor: COCCHI, Lorenzo, I-40068 San Lazzaro Di Savena (BO) (IT)
(74) Representative: Schiavone, Cristina
(86) International application number: PCT/IB2008/053910
(87) International publication number: WO 2009/040759

(56) References cited:
- EP-A- 1 582 193
- EP-A- 1 647 484
- WO-A-96/05485
- WO-A-2007/003407

## Description

### Technical Field

The present invention relates to a method and a corresponding apparatus for a statistic weighing of containers of the type of bottles and similar in a machine for filling such containers.

### Background Art

At present, some machines are known which provide for automatically filling the bottles with a pre-established liquid or powder product, for instance intended to be used in the pharmaceutical industry. In particular, in the pharmaceutical industry the treatment of sterile liquids is required. Such filling machines generally provide for a transfer line along which the empty bottles are intermittently or continuously fed, passing in correspondence with a filling station in which a measured amount of product is poured into the same bottles.

Along the transfer line two weighing stations are usually provided, suitable to verify whether the quantity of product poured into the bottles actually matches the expected values. In particular, in the first station the empty bottles are normally weighed and in the second one the filled containers are weighed, in order to deduce through difference the weight of the product poured in the bottles. The weighing is normally carried out with the aid of gripping means carried by a robotic arm, which provide for collecting the bottle from the transport line to transfer it to the weighing balance and subsequently to reintroduce it on the transport line.

More specifically it has long been spread the use of statistic weighing methods, which provide for weighing not all the containers but only a part of them, at adequate time lag. In such way, on the basis of models of statistic evaluation, it is possible to determine with a high degree of certainty whether the correct filling of the containers is achieved.

The known apparatuses to carry out the statistic weighing generally provide for two robotized aims. The first robotized aim collects an empty bottle to be weighed by the transport line, transfers the said bottle onto a first weighing balance and then reintroduces it onto the transport line. The bottle is then filled with a predetermined measured amount of product. A second robotized arm collects the filled bottle from the transport line, transfers such bottle on a second weighing balance and then reintroduces it onto the transport line.

The use of the statistic weighing method in the specified field is illustrated for instance in international patent application WO 2007/003407. This document illustrates an apparatus comprising conveying means of the containers to be filled, weighing means and transfer means suitable to transfer at least one container to be weighed by the conveying means to the weighing means and at least one weighed container from the weighing means to the conveying means. The transfer means comprise first gripping means suitable to remove the above-mentioned container to be weighed from the conveying means and second gripping means suitable to transfer the above-mentioned weighed container to the conveying means.

The weighing phase is nonetheless a critical operation in the functioning of the known filling machines, due especially to the precision required in such phase, in particular having to fill the bottles with pharmaceutical products and similar. In the cited field the amounts of product to measure are generally limited, therefore it is necessary to use weighing scales particularly sensitive, which can easily suffer the operational conditions of the machine.

It is also known that the cited filling machines are generally intended to work in a sterile environment, with this aim being adequately crossed by a laminar airflow. This condition represents a further constructive constraint for a smooth and fast weighing of the bottles.

A specific problem that arises in the envisaged field consists in the fact that the collection of the bottles to be weighed from the transport line can determine some voids along the same transport line. This determines a discontinuity in the conveyance of the bottles, with negative consequences for the following packaging phase and possible increase of the wastes.

Apart from above international patent application also document WO96/05485 A1 discloses an apparatus for weighing and filling containers. It comprises a linear sliding unit for removing and reinserting containers to be weighed from a first conveying unit to a second conveying unit. The containers are further transported by a carousel to a weighing device. A filling station is installed between two such weighing devices with first and second conveying units each.

Further document EP1647484 A1 discloses a statistical weighing method for a filling machine that involves withdrawing and introducing a container into a filling line by robotic means cooperating with a scale. The method involves weighing empty and filled containers on two sequential weighing stations in order to determine the net weight of filled product.

### Disclosure of Invention

### Disclosure

The aim of the present invention is to overcome the cited drawbacks by devising a method that allows carrying out in an accurate way the statistic weighing of the containers in a filling machine for such containers, ensuring the continuity in the conveyance of the same containers.

Within this scope it is a further aim of the claimed invention to provide an apparatus that allows carrying out in a simple and effective way and with high speed the weighing of the containers in a machine for filling containers operating in a sterile environment.

A further aim of the present invention is to provide an apparatus to weigh the containers very versatile in use, in particular being easily equipped to perform the weighing of all the containers fed in line.

Another aim of the present invention is to provide an apparatus to weigh the containers of simple constructive and functional conception, equipped with a certainly reliable functioning, and relatively economical.

The cited aims are reached, according to the claimed invention, by the method for weighing in a machine for filling containers, comprising a transport line of the containers to be filled with a measured amount of a pre-established product, along which are arranged first weighing means of the empty containers, a filling station of said containers, second weighing means of the filled containers, characterized in that it comprises the phases of
a. feeding an ordered series of containers (2) along a transport line (3) having curvilinear development defined by at least a first rotating distribution member (10) of the containers (2) to be filled, a linear conveying member (20) arranged downstream of said first rotating distribution member (10) and passing through said filling station (F), at least a second rotating distribution member (30) of the filled containers (2) arranged downstream of said linear conveying member (20);
b. selectively collecting at least one empty container (2) from said first rotating distribution member (10) by means of a first collection and transport member (40);
   b1. feeding the containers (2), whose weighing is not required, to a first auxiliary rotating member (60) interposed between said first rotating distribution member (10) and said linear conveying member (20), in order to increase the run time of said transport line (3);
c. transferring said empty container (2) by means of said first collection and transport member (40) to said first weighing means (4);
d. introducing the empty container (2) weighed in said linear conveying member (20), in correspondence with an opening which is determined, in the sequence of containers (2) fed along said transport line (3), by collecting the same container (2) to be weighed from said first rotating distribution member (10);
e. selectively collecting the same container (2) weighed when empty, subsequently filled with a measured amount of product, from said linear conveying member (20) by means of a second collection and transport member (50);
   e1. feeding the containers (2), whose weighing is not required, to a second auxiliary rotating member (70) interposed between said linear conveying member (20) and said second rotating distribution member (30), In order to increase the run time of said transport line (3);
f. transferring said filled container (20) by said second collection and transport member (50) to said second weighing means (5);
g. introducing the weighed filled container (2) in the second rotating distribution member (30), in correspondence with an opening which is determined, in the sequence of containers (2) fed along said transport line (3), by collecting the same filled container (2) to be weighed from said linear conveying member (20).

### Description of Drawings

Description details of the invention will be further evident in the illustrations of preferred embodiments of the apparatus for weighing containers in a filling machine according to the invention, illustrated in the guidelines drawings attached, wherein:
Fig. 1 illustrates a schematic plan view of a filling machine equipped with the claimed weighing apparatus;
Fig. 2 illustrates a plan view of a portion of the apparatus, in correspondence with a weighing station of the empty containers;
Fig. 3 illustrates a sectional side view of a rotating distribution member of the empty containers to said weighing station;
Fig. 4 illustrates a sectional side view of an enlarged portion of said rotating distribution member of the containers;

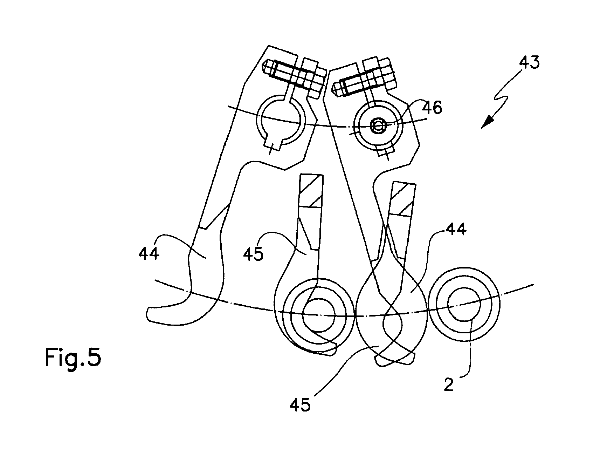

Fig. 5 illustrates a plan view of grippers associated to the said rotating distribution member of the containers.
Fig. 6 illustrates a plan schematic view of a machine for filling containers which is equipped with a different embodiment of the claimed weighing apparatus.

### Best Mode

With reference to such figures, 1 refers to a machine for filling containers 2 with a measured amount of a specified product, for instance a pharmaceutical one. The filling machine 1 has a transport line 3 of the containers 2 which develops on a basically horizontal plan between an input area I and an output area O. The transport line 3 is fed by an apparatus to feed the empty containers 2, already known. As better specified below, the transport line 3 is equipped with dragging means of the containers 2, arranged regularly spaced in ordered sequence; such dragging means are suitable to lead the same containers 2 in correspondence with at least one filling station F.

According to the present invention, the transport line 3 has a curvilinear development defined at least by a first rotating distribution member 10 of the containers 2 to be filled, a linear conveying member 20 arranged downstream of said first rotating distribution member 10 and passing through said filling station F, a second rotating distribution member 30 of the filled containers 2 arranged downstream of said linear conveying member 20.

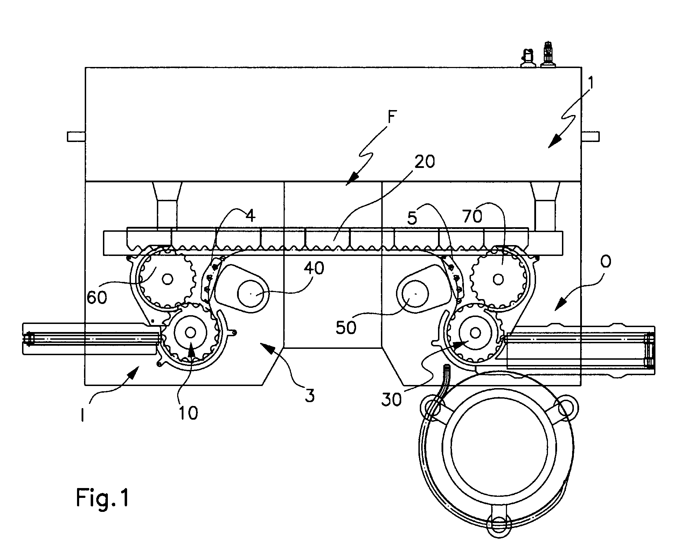

According to the solution illustrated in fig. 1, between the first rotating distribution member 10 and the linear conveying member 20 and between such linear conveyer 20 and the second rotating distribution member 30 are respectively interposed a first and a second auxiliary rotating member 60, 70.

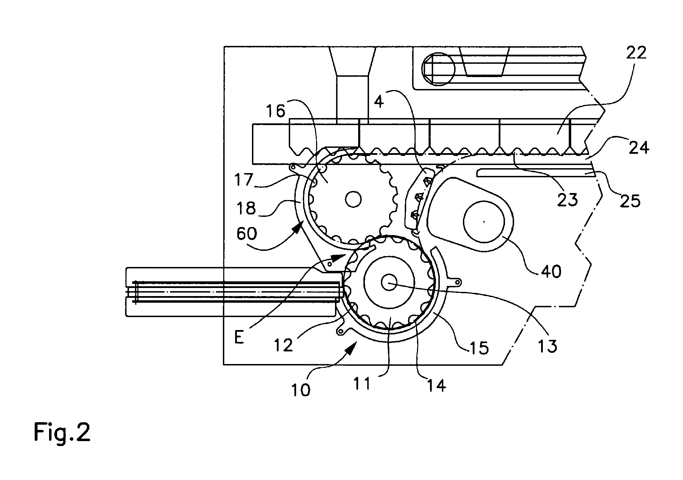

The rotating distribution members 10, 30 respectively consist, basically in a similar way, of a carousel 11 swivelling according to a vertical axis (see in particular fig. 2). The carousel 11 consists of a disk mounted on the vertical motorisation shaft 13 and peripherally presenting a series of inlets 12, adequately shaped. The inlets 12 define the housing seats of individual containers 2 to transport. The containers 2 rest on a suitable support plate 14 and are hold by the above-mentioned housing seats, in feeding phase, by an edge 15 fixed to the frame of the machine. The edge 15 stretches for an arc of a circle around the carousel 11, in correspondence with the part in which the same carousel 11 is engaged by the containers 2.

Clearly the dimensions of the housing seats of the carousel 11 are suited to the dimensions of the containers 2 to be filled and can subsequently be modified according to the production requirements.

The auxiliary rotating members 60, 70 similarly consist of a carousel 16 swivelling according to a vertical axis, equipped with a disk peripherally presenting respective inlets 17 suitable to define the housing seats of the containers 2 in transport phase. The carousel 16 cooperates with a respective fixed edge 18, arranged in correspondence with the part in which the same carousel 16 is engaged by the containers 2.

The carousels 11, 16 are operated in rotation in a differing direction and with identical peripheral speed, in order to allow the passage of the containers 2 from one to the next, in correspondence with an exchange area E in which the same carousels 11, 16 are basically tangent.

The linear conveying member 20 consists of a flexible member 21, for instance a cogged belt, which winds in annular shape round a pair of cogged wheels, not illustrated in the drawings, adequately spaced and motorized according to horizontal axis parallel and lying on a same horizontal plan. The belt 21 bears externally fixed a series of cogged plates 22, arranged longitudinally adjacent, basically without interruptions. The cavities 23 of the cogged plates 22 define respective housing seats of the containers 2 fed along the transport line 3. During the transport phase the containers 2 slide resting on a fixed guide 24 and are laterally held by a fixed edge 25 arranged longitudinally to the linear conveying member 20.

Between the first rotating distribution member 10 and the linear conveying member 20 a first collection and transport member 40 of the empty containers 2 to be weighed is interposed. This collection and transport member 40 is suitable to selectively collect at least one empty container 2 from the above-mentioned first rotating distribution member 10, to transfer the same empty container 2 to first weighing means 4 and then to insert the empty container 2 weighed into the above-mentioned linear conveying member 20. In particular, as illustrated below, the collection and transfer member 40 is suitable to insert the container 2 weighed in correspondence with an opening which is determined, in the sequence of containers 2 fed along the transport line 3, by collecting the same container 2 to be weighed in the rotating distribution member 10.

In the illustrated embodiment, the collection and transport member 40 is suitable to operate on four containers 2 fed in sequence along the transport line 3. Preferably, to realize the statistic weighing, the weighing means 4, already known, are equipped with two weighing cells; in case the weighing of all the containers 2 fed in sequence along the transport line 3 has instead to be carried out, the weighing means 4 are adequately equipped with four weighing cells.

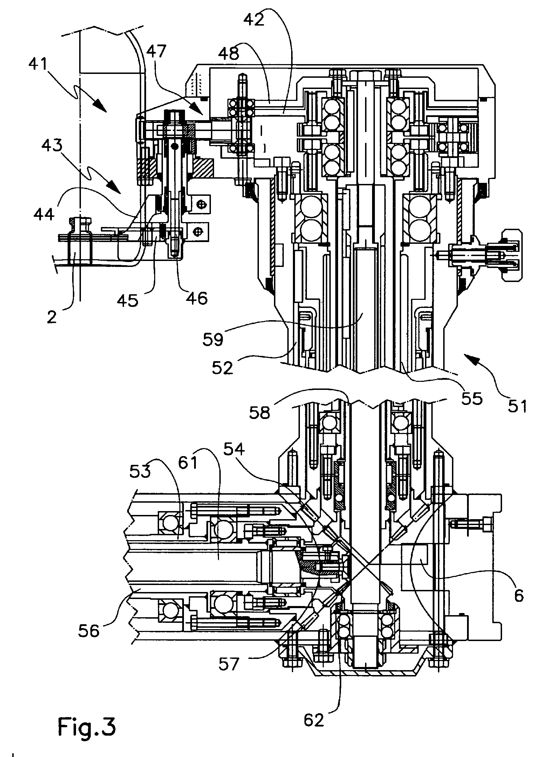

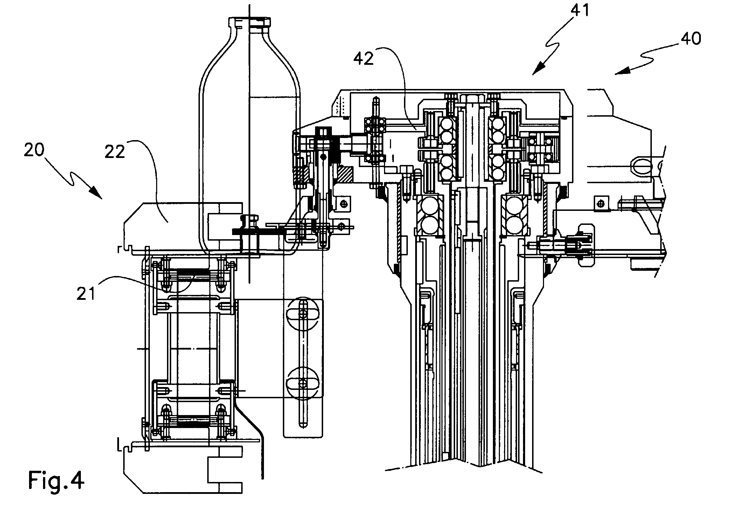

More specifically, the collection and transfer member 40 comprises a gripping unit 41, which is arranged swivelling in step at the upper end of a handling device 51 (see fig. 3 and 4). The gripping unit 41 is equipped with four grippers 43 arranged alongside on a horizontal plan. Each gripper 43 consists of a pair of jaws 44, 45 pivoted, at different heights, on pivots 46 with vertical axis. Preferably the jaws 44, 45 are mounted respectively coaxial on the pivots 46 of the jaws of the adjacent grippers 43. The jaws 44, 45 are operated in opening and closing through a tappet-device 47 controlled through a fixed cam 48.

The handling device 51 comprises a tubular shaft 52 to control the angular rotation of the gripping unit 41, swivelling according to a vertical axis. This tubular axis 52 is suitable to be operated in step in rotation by an input shaft 53, having itself tubular shape, which stretches horizontally overhanging from one back part of the machine frame. In particular, the tubular shaft 52 is operated intermittently, preferably with an angular rotation of 60° each cycle in order to realize a complete turn every 6 machine cycles. The input shaft 53 is coupled to the tubular shaft 52 through a suitable bevel gear 54.

Inside the tubular shaft 52 to control the angular rotation a second tubular shaft 55 is mounted coaxially, through interposition of suitable revolving means, to operate the grippers 43. The tubular shaft 55 can be operated in rotation by a second motorization shaft 56, having tubular shape, mounted coaxially inside the input shaft 53 and coupled to the tubular shaft 55 through a suitable bevel gear 57.

The tubular shaft 55 bears at its upper end a mobile cam 42 to select the grippers 43 to operate.

The tubular shaft 55 is inserted onto a sleeve 58 which has angular position fixed with respect to the machine frame. With this aim the sleeve 58 is fastened at its base to a flange 6 fixed to the machine frame, which prevents the rotation of the same sleeve 58. The sleeve 58 bears at its top the above-mentioned fixed cam 48.

The sleeve 58 is telescopically inserted onto a shaft 59 to control the vertical movement of the gripping unit 41. The shaft 59 has on its upper part a threaded part, which is coupled to a part of nut screw internally shaped by the sleeve 58. The shaft 59 can be operated in rotation by a third motorization shaft 61, mounted coaxial inside the second motorization shaft 56 and coupled to the shaft through a suitable bevel gear 62.

Between the linear conveying member 20 and the second rotating distribution member 30 it is interposed a second collection and transfer member 50 of the containers 2 to be weighed after the filling with a measured amount of product. This collection and transfer member 50 is suitable to selectively collect the same containers 2 weighed when empty, subsequently filled with the above-mentioned measured amount of product, by the said linear conveying member 20, to transfer these containers 2 to second weighing means 5 and then to introduce the weighed containers 2 into the second rotating distribution member 30, in correspondence with some openings which are determined, in the sequence of the containers 2 fed along the transport line 3, by the collection of the same containers 2 to be weighed from the linear conveying member 20.

The second collection and transfer member 50 is similar, from the constructive and functional point of view, to the first collection and transfer member 40, previously described. Likewise, the second weighing means 5 are preferably equipped with two weighing cells, to perform the statistic weighing; whereas, to realize the weighing of all the containers 2 fed along the transport line 3, the weighing means 5 are adequately equipped with four weighing cells.

The weighing method according to the invention provides for feeding an ordered sequence of containers 2 along the transport line 3 with curvilinear development defined by the first rotating distribution member 10 of the containers 2 to be filled, by the linear conveying member 20 passing through the filling station F, by the second rotating distribution member 30 of the filled containers 2, and also by the auxiliary rotating members 60, 70.

The container or the containers 2 to be weighed are selectively collected from the first rotating distribution member 10 by means of the first collection and transfer member 40 and transferred by this to the first weighing means 4. With this aim, the handling device 51 controls in sequence the operating of the grippers 43 selected for gripping a respective container 2 to be weighed, the rotation of the gripping unit 41 to bring the container 2 to be weighed in correspondence with the weighing means 4, the lowering of the gripping unit 41 and the opening of the grippers 43 to release the container 2 on the weighing means 4, the further closing of the grippers 43 to grip the weighed container 2, the lifting and subsequent rotation of the gripping unit 41 to bring the weighed container 2 in correspondence with the linear conveying member 20.

Vice versa, the containers 2 whose weighing is not required, in the statistic weighing, carry on along the transport line 3, automatically passing from the rotating distribution member 10 to the auxiliary rotating member 60, in correspondence with the exchange area E. From this auxiliary rotating member 60 the non-weighed containers 2 are then transferred to the linear conveying member 20, without interruption.

The weighed container 2 is instead inserted into the linear conveying member 20 in correspondence with the opening which is determined, in the sequence of containers 2 fed along the transport line 3, by the collection of the same container 2 to be weighed from the first rotating distribution member 10.

To perform the statistic weighing, a selected number of containers 2 is preferably collected and weighed, for instance in the case illustrated four subsequent containers. It is clearly possible to vary the sequence of the containers 2 selected for the weighing in the desired way, according to the specific requirements.

The containers 2 are fed transported by the linear conveying member 20 through the filling station F, in correspondence with which they are filled with a prearranged measured amount of product, according to known modalities.

Downstream of the filling station F, the same containers 2 weighed when empty and subsequently filled with a measured amount of product are collected in sequence from the linear conveying member 20 by means of the second collection and transfer member 50 and transferred to the second weighing means 5. The filled containers 2, after having being weighed, are introduced in the second rotating distribution member 30, in correspondence with the openings which are determined, in the sequence of containers 2 fed along the transport line 3, by the collection of the same containers 2 from the linear conveying member 20. The collection, transfer and subsequent insertion in line of the containers 2 by the second collection and transfer member 50 is carried out in a way very similar to the one previously described for the first collection and transfer member 40.

The containers 2 previously not weighed when empty, instead, go on along the transport line 3, passing automatically from the linear conveying member 20 to the auxiliary rotating member 70 and subsequently from this auxiliary rotating member to the rotating distribution member 30.

The method and apparatus described reach therefore the aim to carry out in a simple, effective and accurate way the statistic weighing of the containers in a machine for filling such containers.

In particular, the method according to the claimed invention allows ensuring the continuity of the transportation of the containers coming out from the filling machine. This is obtained thanks to the fact that the weighed containers 2 are reinserted in line by the collection and transfer members 40, 50 in the same openings created by their collection, in the sequence of the containers 2 fed along the transport line 3.

It has to be particularly pointed out the fact that the auxiliary rotating members 60, 70 have, in the statistic weighing, the essential function to lengthen in a prearranged way the length of the path run by the containers 2 that are not weighed along the transport line 3. This lengthening of the path allows to make up for the time necessary for the collection and weighing of the containers 2 vice versa statistically selected to be weighed in correspondence with the weighing means 4, 5. In such way, the weighed containers 2 can be reinserted in line exactly in the openings determined by the collection of the same containers 2 to be weighed. In other words, the auxiliary rotating members 60, 70 function as timers in the statistic weighing of the containers.

A prerogative of the claimed apparatus consists in its applicability to filling machines arranged to work in a sterile environment. In fact, during the movement along the transport line 3, the containers 2 are freely exposed to the laminar airflow, generally conduced from the top to the bottom, through which sterility is kept.

The solution according to the claimed invention also allows carrying out, on request, also the complete weighing of all the containers 2, if required by particular productive needs. With this aim, the auxiliary rotating members 60, 70 are adequately excluded from the transport line of the containers, so that all the containers 2 fed by the rotating distribution member 10 are collected in sequence by the collection and transfer means 40 adequately shaped, weighed and subsequently reinserted in line in the linear conveying member 20. Similarly, it is obviously carried out the collection of the containers 2 filled from the linear conveying member 20, their weighing and the reinsertion in the rotating distribution member 30 through which the containers 2 are directed to the following packaging phases.

It also has to be pointed out that the passage from the statistic weighing to the weighing of all the containers can be realized in a very simple and fast way, by substituting the few mechanical units.

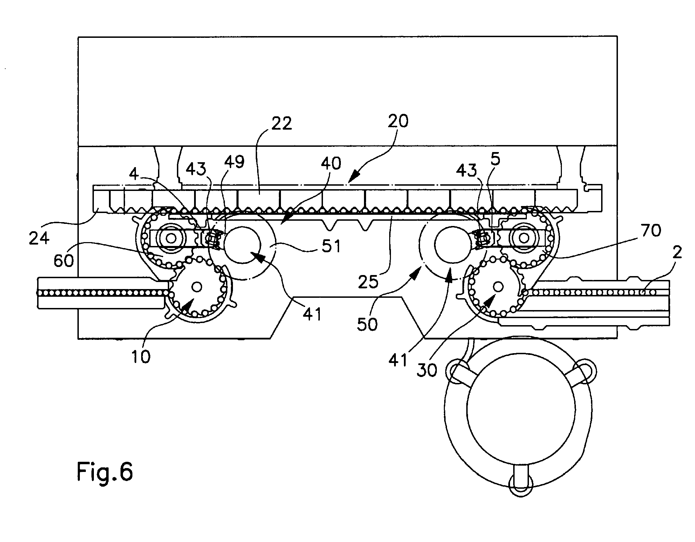

Fig. 6 illustrates a different embodiment of the apparatus, in which the gripping unit 41 of the first and second collection and transport member 40, 50 is only equipped with one gripper 43, borne by an arm 49 swivelling at the top of the handling device 51 and suitable to be operated in rotation with a speed controlled by a suitable motor unit. In particular, the gripper 43 is operated so that it achieves the same peripheral speed of the first and second rotating distribution member 10, 30 and of the linear conveying member 20, respectively during the phases of collecting and introducing a respective container 2, and so that it stops in correspondence with the weighing means 4, 5 during the said phases of weighing the same container 2. Clearly, in this case the weighing means 4, 5 are only equipped with one weighing cell.

It has to be pointed out that the described solution allows performing both the statistic and the complete weighing of all the containers 2, without any alterations of the apparatus. In particular, it is possible to perform the complete weighing of the containers 2 at the beginning of the production cycle, and then to perform the statistical weighing without interrupting the working cycle.

Materials adopted for the actual realisation of the invention, as well as their shapes and sizes, can be various, depending on the requirements.

Where technical features mentioned in any claims are followed by reference signs, those reference signs have been included for the sole purpose of increasing the intelligibility of the claims and accordingly such reference signs do not have any limiting effect on the scope of each element identified by way of example by such reference signs.

## Claims

1. Method for weighing in a machine for filling containers, comprising a transport line (3) of the containers (2) to be filled with a measured amount of a pre-established product, along which are arranged first weighing means (4) of the empty containers (2), a filling station (F) of said containers (2), second weighing means (5) of the filled containers (2), **characterized in that** it comprises the phases of
a. feeding an ordered series of containers (2) along a transport line (3) having curvilinear development defined by at least a first rotating distribution member (10) of the containers (2) to be filled, a linear conveying member (20) arranged downstream of said first rotating distribution member (10) and passing through said filling station (F), at least a second rotating distribution member (30) of the filled containers (2) arranged downstream of said linear conveying member (20);
b. selectively collecting at least one empty container (2) from said first rotating distribution member (10) by means of a first collection and transport member (40);
b1. feeding the containers (2), whose weighing is not required, to a first auxiliary rotating member (60) interposed between said first rotating distribution member (10) and said linear conveying member (20), in order to increase the run time of said transport line (3);
c. transferring said empty container (2) by means of said first collection and transport member (40) to said first weighing means (4);
d. introducing the empty container (2) weighed in said linear conveying member (20), in correspondence with an opening which is determined, in the sequence of containers (2) fed along said transport line (3), by collecting the same container (2) to be weighed from said first rotating distribution member (10);
e. selectively collecting the same container (2) weighed when empty, subsequently filled with a measured amount of product, from said linear conveying member (20) by means of a second collection and transport member (50);
e1. feeding the containers (2), whose weighing is not required, to a second auxiliary rotating member (70) interposed between said linear conveying member (20) and said second rotating distribution member (30), In order to increase the run time of said transport line (3);
f. transferring said filled container (20) by said second collection and transport member (50) to said second weighing means (5);
g. introducing the weighed filled container (2) in the second rotating distribution member (30), in correspondence with an opening which is determined, in the sequence of containers (2) fed along said transport line (3), by collecting the same filled container (2) to be weighed from said linear conveying member (20).

2. Method according to claim 1, **characterized in that** said first and second collection and transport member (40, 50) respectively provide a gripping unit (41), which is equipped with a gripper (43) borne by an arm (49) swivelling at the top of a handling device (51) and suitable to be operated in rotation with a controlled speed, so that it achieves the same peripheral speed of the said first and second rotating distribution member (10, 30) of the containers (2), and of the said linear conveying member (20), respectively during the phases of collecting and introducing a respective container (2), and so that it stops in correspondence with the said weighing means (4, 5) during the said phases of weighing the same container 2.

3. Apparatus for weighing in a machine for filling containers, comprising a transport line (3) of the containers (2) to be filled with a measured amount of a pre-established product, along which are arranged first weighing means (4) of the empty containers, a filling station (F) of the said containers (2), second weighing means (5) of the filled containers (2), **characterized in that** said transport line (3) has curvilinear development defined by at least a first rotating distribution member (10) of the containers (2) to be filled;
a linear conveying member (20) arranged downstream of said first rotating distribution member (10) and passing through said filling station (F);
a first auxiliary rotating member (60), interposed between said first rotating distribution member (10) and said linear conveying member (20), in order to increase the run time of said transport line (3) by the containers (2) whose weighing is not required;
at least a second rotating distribution member (30) of the filled containers (2) arranged downstream of said linear conveying member (20);
a second auxiliary rotating member (70), interposed between said linear conveying member (20) and said second rotating distribution member (30), in order to increase the run time of said transport line (3) by the containers (2) whose weighing is not required; and **in that** it provides at least a first collection and transport member (40) suitable to selectively collect at least one empty container (2) from said first rotating distribution member (10), to transfer said empty container (2) to said first weighing means (4) and then to introduce the empty container (2) weighed in said linear conveying member (20), in correspondence with an opening which is determined, in the sequence of containers (2) fed along said transport line (3), by collecting said container (2) to be weighed from said first rotating distribution member (10);
and at least a second collection and transport member (50) suitable to selectively collect the same container (2) weighed when empty, subsequently filled with a measured amount of product, from said linear conveying member (20), to transfer said filled container (2) to said second weighing means (5) and then to introduce the filled container (2) weighed into said second rotating distribution member (30), in correspondence with an opening which is determined, in the sequence of containers (2) fed along said transport line (3), by collecting the same filled container (2) to be weighed from said linear conveying member (20).

4. Apparatus according to claim 3, **characterized in that** said auxiliary rotating members (60, 70) consist of a carousel (16) swivelling according to a vertical axis and peripherally presenting a series of inlets (17) suitable to define the housing seats of individual containers (2) to transport.

5. Apparatus according to claim 3, **characterized In that** said first and said second rotating distribution member (10, 30) of the containers (2) respectively consist of a carousel (11) swivelling according to a vertical axis and peripherally presenting a series of inlets (12) suitable to define the housing seats of individual containers (2) to transport.

6. Apparatus according to claim 3, **characterized in that** said first and said second collection and transfer member (40, 50) respectively provide a gripping unit (41), which is arranged swivelling in step at the upper end of a handling device (51).

7. Apparatus according to claim 6, **characterized in that** said gripping unit (41) is equipped with a plurality of grippers (43) arranged alongside on a horizontal plan.

8. Apparatus according to claim 7, **characterized in that** each gripper (43) consists of a pair of jaws (44, 45) pivoted on pivots (46) with vertical axis and operated in opening and closing through a tappet-device (47) controlled through a fixed cam (48).

9. Apparatus according to claim 8, **characterized in that** said jaws (44, 45) are pivoted on said pivots (46) at staggered heights, the jaws of each gripper (43) being mounted coaxial on the pivots (46) of the jaws of the adjacent grippers (43).

10. Apparatus according to claim 6, **characterized in that** said handling device (51) comprises a tubular shaft (52) to control the angular rotation of the gripping unit (41), swivelling according to a vertical axis and suitable to be operated in rotation in step, inside said tubular shaft to control the angular rotation being mounted coaxially, for interposition of suitable rolling members, a second tubular shaft (55) suitable to be operated in rotation and having a mobile cam (42) on top to select the grippers (43) to be operated.

11. Apparatus according to claims 8 and 10, **characterized in that** said second tubular shaft (55) is inserted on a sleeve (58), which has fixed angular position with respect to the frame of the machine and bears to the upper end said fixed cam (48),

12. Apparatus according to claim 11, **characterized in that** said sleeve (58) is telescopically inserted on a shaft (59) to control the vertical movement of said gripping unit (41), said shaft (59) presenting on its upper part a threaded portion, which is coupled with a portion of internal thread Internally shaped by said sleeve (58) and that can be operated in rotation to operate said vertical movement of the gripping unit (41),

13. Apparatus according to claim 3, **characterized in that** said linear conveying member (20) consists of a flexible member (21), which winds round in annular shape on a pair of cogged wheels, adequately spaced and motorized according to horizontal axis parallel and lying on a same horizontal plan, and has externally fixed a series of cogged plates (22), arranged longitudinally adjacent, presenting a series of opening (23) suitable to define the housing seats of single containers (2) to be transported.

14. Apparatus according to claim 3, **characterized in that** said first and second collection and transport member (40, 50) respectively provide a gripping unit (41), which is equipped with a gripper (43) borne by an arm (49) swivelling at the top of a handling device (51) and suitable to be operated in rotation with a controlled speed, so that it achieves the same peripheral speed of the said first and second rotating distribution member (10, 30) of the containers (2), and of the said linear conveying member (20), respectively during the phases of collecting and introducing a respective container (2), and so that it stops in correspondence with the said weighing means (4, 5) during the said phases of weighing the same container (2).

## Patentansprüche

1. Verfahren zum Wiegen in einer Behälterfüllmaschine, das eine Strecke (3) zum Transportieren der mit einer dosierten Menge eines vorbestimmten Füllguts zu füllenden Behälter (2), längs der erste Mittel (4) zum Wiegen der leeren Behälter (2) angeordnet sind, eine Station (F) zum Füllen dieser Behälter (2) und zweite Mittel (5) zum Wiegen der gefüllten Behälter (2) umfasst, **dadurch gekennzeichnet, dass** es die folgenden Phasen vorsieht:
a. Zuführen einer geordneten Folge von Behältern (2) längs einer Förderstrecke (3) mit einem kurvenförmigen Verlauf, der durch mindestens ein erstes Drehelement (10) zum Verteilen der zu füllenden Behälter (2), ein lineares Förderelement (20), das stromabwärts des ersten drehenden Verteilelements(10) angeordnet ist und durch die Füllstation (F) verläuft, und mindestens ein zweites Drehelement (30) zum Verteilen der gefüllten Behälter (2) definiert wird, das stromabwärts des linearen Förderelements (20) angeordnet ist;
b. selektives Entnehmen von mindestens einem leeren Behälter (2) von dem ersten drehenden Verteilelement (10) mit Hilfe eines ersten Entnahme- und Transferelements (40);
b1. Zuführen der Behälter (2), deren Wägung nicht erforderlich ist, zu einem ersten drehenden Hilfselement (60), das zwischen das erste Drehelement (10) und das lineare Förderelement (20) eingefügt ist, um die Zeit zum Durchlaufen der Förderstrecke (3) zu verlängern;
c. Transferieren des leeren Behälters (2) mit Hilfe des ersten Entnahme- und Transferelements (40) an die ersten Wägemittel (4);
d. Einsetzen des gewogenen leeren Behälters (2) in das lineare Förderelement (20) in Entsprechung mit einem Raum, der in der Aufeinanderfolge der längs der Förderstrecke (3) zugeführten Behälter (2) durch die Entnahme desselben zu wiegenden Behälters (2) vom ersten drehenden Verteilelement (10) bedingt wird;
e. selektives Entnehmen desselben leer gewogenen und anschließend mit einer dosierten Füllgutmenge gefüllten Behälters (2) vom linearen Förderelement (20) mit Hilfe eines zweiten Entnahme- und Transferelements (50);
e1. Zuführen der Behälter (2), deren Wägung nicht erforderlich ist, zu einem zweiten drehenden Hilfselement (70), das zwischen das lineare Förderelement (20) und das zweite drehende Verteilelement (30) eingefügt ist, um die Zeit zum Durchlaufen der Förderstrecke (3) zu verlängern;
f. Transferieren des gefüllten Behälters (2) mit Hilfe des zweiten Entnahme- und Transferelements (50) an die zweiten Wägemittel (5);
g. Einsetzen des gefüllten gewogenen Behälters (2) in das zweite drehende Verteilelement (30) in Entsprechung mit einem Raum, der in der Aufeinanderfolge der längs der Förderstrecke (3) zugeführten Behälter (2) durch die Entnahme desselben zu wiegenden gefüllten Behälters (2) vom linearen Förderelement (20) bedingt wird.

2. Verfahren nach Anspruch 1, **dadurch gekennzeichnet, dass** das erste und das zweite Entnahme- und Transferelement (40, 50) jeweils eine Greifeinheit (41) vorsehen, die mit einem zangenartigen Greifelement (43) versehen ist, das von einem drehbaren Arm (49) an der Spitze einer Handhabungsvorrichtung (51) getragen wird und geeignet ist, mit einer gesteuerten Drehzahl in Drehung versetzt zu werden, so dass es während der Phasen der Entnahme beziehungsweise des Einsetzens eines jeweiligen Behälters (2) die gleiche Umfangsgeschwindigkeit wie das erste und das zweite drehende Element (10, 30) zum Verteilen der Behälter (2) beziehungsweise des linearen Förderelements (20) erreicht, und so dass es während der Phasen des Wiegens desselben Behälters (2) in Entsprechung mit den Wägemitteln (4, 5) anhält.

3. Vorrichtung zum Wiegen in einer Behälterfüllmaschine, die eine Strecke (3) zum Transportieren der mit einer dosierten Menge eines vorbestimmten Füllguts zu füllenden Behälter (2), längs der erste Mittel (4) zum Wiegen der leeren Behälter (2) angeordnet sind, eine Station (F) zum Füllen dieser Behälter (2) und zweite Mittel (5) zum Wiegen der gefüllten Behälter (3) umfasst, **dadurch gekennzeichnet, dass** die Förderstrecke (3) einen kurvenförmigen Verlauf aufweist, der definiert wird durch
mindestens ein erstes Drehelement (10) zum Verteilen der zu füllenden Behälter (2);
ein lineares Förderelement (20), das stromabwärts des ersten drehenden Verteilelements (10) angeordnet ist und durch die Füllstation (F) verläuft;
ein erstes drehendes Hilfselement (60), das zwischen das erste drehende Verteilelement (10) und das lineare Förderelement (20) eingefügt ist, um die Zeit zum Durchlaufen der Förderstrecke (3) seitens der Behälter (2) zu verlängern, deren Wägung nicht erforderlich ist;
mindestens ein zweites Drehelement (30) zum Verteilen der gefüllten Behälter (2), das stromabwärts des linearen Förderelements (20) angeordnet ist;
ein zweites drehendes Hilfselement (70), das zwischen das lineare Förderelement (20) und das drehende Verteilelement (30) eingefügt ist, um die Zeit zum Durchlaufen der Förderstrecke (3) seitens der Behälter (2) zu verlängern, deren Wägung nicht erforderlich ist;
und dadurch, dass sie mindestens ein erstes Entnahme- und Transferelement (40) vorsieht, das geeignet ist, selektiv mindestens einen leeren Behälter (2) vom ersten drehenden Verteilelement (10) zu nehmen, diesen leeren Behälter (2) zu den ersten Wägemitteln (4) zu transferieren und dann den gewogenen leeren Behälter (2) in Entsprechung mit einem Raum in das lineare Förderelement (20) einzusetzen, der in der Aufeinanderfolge der längs der Förderstrecke (3) zugeführten Behälter (2) durch die Entnahme desselben zu wiegenden Behälters (2) vom ersten drehenden Verteilelement (10) bedingt wird;
und mindestens ein zweites Entnahme- und Transferelement (50), das geeignet ist, selektiv denselben leer gewogenen und anschließend mit einer dosierten Füllgutmenge gefüllten Behälter (2) vom linearen Förderelement (20) zu nehmen, diesen gefüllten Behälter (2) zu den zweiten Wägemitteln (5) zu transferieren und dann den gewogenen gefüllten Behälter (2) in Entsprechung mit einem Raum in das zweite drehende Verteilelement (30) einzusetzen, der in der Aufeinanderfolge der längs der Förderstrecke (3) zugeführten Behälter (2) durch die Entnahme desselben zu wiegenden gefüllten Behälters (2) vom linearen Förderelement (20) bedingt wird.

4. Vorrichtung nach Anspruch 3, **dadurch gekennzeichnet, dass** die drehenden Hilfselemente (60, 70) aus einem Karussell (16) bestehen, das um eine vertikale Achse drehbar ist und peripher eine Reihe von Einbuchtungen (17) aufweist, die geeignet sind, die Aufnahmen für einzelne zu transportierende Behälter (2) zu definieren.

5. Vorrichtung nach Anspruch 3, **dadurch gekennzeichnet, dass** das erste und das zweite Drehelement (10, 30) zum Verteilen der Behälter (2) jeweils aus einem Karussell (11) bestehen, das um eine vertikale Achse drehbar ist und peripher eine Reihe von Einbuchtungen (12) aufweist, die geeignet sind, die Aufnahmen für einzelne zu transportierende Behälter (2) zu definieren.

6. Vorrichtung nach Anspruch 3, **dadurch gekennzeichnet, dass** das erste und das zweite Entnahme- und Transferelement (40, 50) jeweils eine Greifeinheit (41) vorsehen, die schrittweise drehbar an der Spitze einer Handhabungsvorrichtung (51) getragen wird.

7. Vorrichtung nach Anspruch 6, **dadurch gekennzeichnet, dass** die Greifeinheit (41) mit einer Vielzahl von zangenartigen Greifelementen (43) ausgestattet ist, die in einer horizontalen Ebene nebeneinander angeordnet sind.

8. Vorrichtung nach Anspruch 7, **dadurch gekennzeichnet, dass** jedes zangenartige Greifelement (43) aus einem Paar von Backen (44, 45) besteht, die auf Zapfen (46) mit vertikaler Achse drehbar gelagert sind und deren Öffnen und Schließen durch eine Stößelvorrichtung (47) angetrieben wird, die durch einen festen Nocken (48) gesteuert wird.

9. Vorrichtung nach Anspruch 8, **dadurch gekennzeichnet, dass** die Backen (44, 45) auf versetzten Höhen drehbar auf den Zapfen (46) gelagert sind, wobei die Backen jedes zangenartigen Greifelements (43) koaxial auf die Zapfen (46) der Backen der benachbarten zangenartigen Greifelemente (43) montiert sind.

10. Vorrichtung nach Anspruch 6, **dadurch gekennzeichnet, dass** die Handhabungsvorrichtung (51) eine rohrförmige Welle (52) zum Steuern der Winkeldrehung der Greifeinheit (41) umfasst, die um eine vertikale Achse drehbar und geeignet ist, schrittweise in Drehung versetzt zu werden, wobei in die rohrförmige Welle zum Steuern der Winkeldrehung durch Einfügung von geeigneten Wälzelementen eine zweite rohrförmige Welle (55) koaxial montiert ist, die geeignet ist, in Drehung versetzt zu werden und die an der Spitze einen beweglichen Nocken (42) für die Wahl der zu betätigenden zangenartigen Greifelemente (43) trägt.

11. Vorrichtung nach den Ansprüchen 8 und 10, **dadurch gekennzeichnet, dass** die zweite rohrförmige Welle (55) in eine Muffe (58) eingesetzt ist, die eine bezogen auf den Rahmen der Maschine feste Winkelstellung hat und an der Spitze den festen Nocken (48) trägt.

12. Vorrichtung nach Anspruch 11, **dadurch gekennzeichnet, dass** die Muffe (58) teleskopisch in eine Welle (59) zum Steuern der vertikalen Verstellung der Greifeinheit (41) eingesetzt ist, wobei die Welle (59) am oberen Teil einen Abschnitt mit Gewinde aufweist, der mit einem Mutterabschnitt verbunden ist, der in der Muffe (58) ausgebildet ist, und in Drehung versetzt werden kann, um die vertikale Verstellung der Greifeinheit (41) anzutreiben.

13. Vorrichtung nach Anspruch 3, **dadurch gekennzeichnet, dass** das lineare Förderelement (20) aus einem flexiblem Element (21) besteht, das sich ringförmig um ein Paar von Zahnrädern windet, die angemessen beabstandet und um horizontale, parallele und in derselben horizontalen Ebene liegende Achsen angetrieben werden, und das eine Reihe von außen befestigten gezahnten Platten (22) trägt, die in Längsrichtung nebeneinander angeordnet sind und eine Reihe von Vertiefungen (23) aufweisen, die geeignet sind, die Aufnahmen für einzelne zu transportierende Behälter (2) zu definieren.

14. Vorrichtung nach Anspruch 3, **dadurch gekennzeichnet, dass** das erste und das zweite Entnahme- und Transferelement (40, 50) jeweils eine Greifeinheit (41) vorsehen, die mit einem zangenartigen Greifelement (43) versehen ist, das von einem drehbaren Arm (49) an der Spitze einer Handhabungsvorrichtung (51) getragen wird und geeignet ist, mit einer gesteuerten Drehzahl in Drehung versetzt zu werden, so dass es während der Phasen der Entnahme beziehungsweise des Einsetzens eines jeweiligen Behälters (2) die gleiche Umfangsgeschwindigkeit wie das erste und das zweite drehende Element (10, 30) zum Verteilen der Behälter (2) beziehungsweise des linearen Förderelements (20) erreicht, und so dass es während der Phasen des Wiegens desselben Behälters (2) in Entsprechung mit den Wägemitteln (4, 5) anhält.

## Revendications

1. Méthode de pesage dans une machine pour le remplissage de récipients, comprenant une ligne de transport (3) des récipients (2) à remplir avec une quantité mesurée d'un produit prédéterminé, le long de laquelle sont disposés des premiers moyens de pesage (4) des récipients (2) vides, une station de remplissage (F) desdits récipients (2), des seconds moyens de pesage (5) des récipients (2) remplis, **caractérisée en ce qu'**elle comprend les étapes de :
a. alimenter une série ordonnée de récipients (2) le long d'une ligne de transport (3) ayant un développement curviligne défini par au moins un premier organe rotatif de distribution (10) des récipients (2) à remplir, un organe linéaire de transport (20) disposé en aval dudit premier organe rotatif de distribution (10) et passant à travers ladite station de remplissage (F), au moins un second organe rotatif de distribution (30) des récipients (2) remplis disposé en aval dudit organe linéaire de transport (20) ;
b. prélever sélectivement au moins un récipient (2) vide par ledit premier organe rotatif de distribution (10) au moyen d'un premier organe de prélèvement et transfert (40) ;
b1. alimenter les récipients (2), dont le pesage n'est pas requis, à un premier organe rotatif auxiliaire (60) interposé entre ledit premier organe rotatif de distribution (10) et ledit organe linéaire de transport (20), pour augmenter le temps de parcours de ladite ligne de transport (3) ;
c. transférer ledit récipient (2) vide au moyen dudit premier organe de prélèvement et transfert (40) auxdits premiers moyens de pesage (4) ;
d. introduire le récipient (2) vide pesé dans ledit organe linéaire de transport (20), au niveau d'un espace qui est déterminé, dans la séquence de récipients (2) alimentés le long de ladite ligne de transport (3), en prélevant le même récipient (2) à peser par ledit premier organe rotatif de distribution (10) ;
e. prélever sélectivement le même récipient (2) pesé à vide, successivement rempli avec une quantité mesurée de produit, dudit organe linéaire de transport (20) au moyen d'un second organe de prélèvement et transfert (50) ;
e1. alimenter les récipients (2), dont le pesage n'est pas requis, à un second organe rotatif auxiliaire (70) interposé entre ledit organe linéaire de transport (20) et ledit second organe rotatif de distribution (30), pour augmenter le temps de parcours de ladite ligne de transport (3) ;
f. transférer par ledit second organe de prélèvement et transfert (50) ledit récipient (2) rempli auxdits seconds moyens de pesage (5) ;
g. introduire le récipient (2) rempli pesé dans le second organe rotatif de distribution (30), au niveau d'un espace qui est déterminé, dans la séquence de récipients (2) alimentés le long de ladite ligne de transport (3), en prélevant le même récipient (2) rempli à peser dudit organe linéaire de transport (20).

2. Méthode selon la revendication 1, **caractérisée en ce que** lesdits premier et second organes de prélèvement et transfert (40, 50) prévoient respectivement un groupe de préhension (41), qui est équipé d'un organe de préhension à pince (43) porté par un bras (49) tournant au sommet d'un dispositif de mise en mouvement (51) et propre à être mis en rotation avec une vitesse contrôlée, de façon à atteindre la même vitesse périphérique que lesdits premier et second organes rotatifs de distribution (10, 30) des récipients (2), et que ledit organe linéaire de transport (20), respectivement durant les étapes de prélèvement et d'introduction d'un récipient (2) respectif, et de façon à s'arrêter au niveau desdits moyens de pesage (4, 5) durant lesdites étapes de pesage du même récipient (2).

3. Appareil de pesage dans une machine pour le remplissage de récipients, comprenant une ligne de transport (3) des récipients (2) à remplir avec une quantité mesurée d'un produit prédéterminé, le long de laquelle sont disposés des premiers moyens de pesage (4) des récipients vides, une station de remplissage (F) desdits récipients (2), des seconds moyens de pesage (5) des récipients remplis, **caractérisé en ce que** ladite ligne de transport (3) présente un développement curviligne défini par au moins un premier organe rotatif de distribution (10) des récipients (2) à remplir ;
un organe linéaire de transport (20) disposé en aval dudit premier organe rotatif de distribution (10) et passant à travers ladite station de remplissage (F) ;
un premier organe rotatif auxiliaire (60), interposé entre ledit premier organe rotatif de distribution (10) et ledit organe linéaire de transport (20), pour augmenter le temps de parcours de ladite ligne de transport (3) par les récipients (2) dont le pesage n'est pas requis ;
au moins un second organe rotatif de distribution (30) des récipients (2) remplis disposé en aval dudit organe linéaire de transport (20) ;
un second organe rotatif auxiliaire (70), interposé entre ledit organe linéaire de transport (20) et ledit second organe rotatif de distribution (30), pour augmenter le temps de parcours de ladite ligne de transport (3) par les récipients (2) dont le pesage n'est pas requis ;
et **en ce qu'**il prévoit au moins un premier organe de prélèvement et transfert (40) propre à prélever sélectivement au moins un récipient (2) vide par ledit premier organe rotatif de distribution (10), à transférer ledit récipient (2) vide aux premiers moyens de pesage (4) et ensuite à introduire le récipient (2) vide pesé dans ledit organe linéaire de transport (20), au niveau d'un espace qui est déterminé, dans la séquence de récipients (2) alimentés le long de ladite ligne de transport (3), en prélevant ledit récipient (2) à peser dudit premier organe rotatif de distribution (10) ;
et au moins un second organe de prélèvement et transfert (50) propre à prélever sélectivement le même récipient (2) pesé à vide, successivement rempli avec une quantité mesurée de produit, dudit organe linéaire de transport (20), à transférer ledit récipient (2) rempli auxdits seconds moyens de pesage (5) et ensuite à introduire le récipient (2) rempli pesé dans ledit second organe rotatif de distribution (30), au niveau d'un espace qui est déterminé, dans la séquence de récipients (2) alimentés le long de ladite ligne de transport (3), en prélevant le même récipient (2) rempli à peser dudit organe linéaire de transport (20).

4. Appareil selon la revendication 3, **caractérisé en ce que** lesdits organes rotatifs auxiliaires (60, 70) sont constitués d'un carrousel (16) tournant selon un axe vertical et présentant en périphérie une série d'anses (17) propres à définir les sièges de logement de récipients (2) individuels à transporter.

5. Appareil selon la revendication 3, **caractérisé en ce que** lesdits premier et second organes rotatifs de distribution (10, 30) des récipients (2) sont respectivement constitués d'un carrousel (11) tournant selon un axe vertical et présentant en périphérie une série d'anses (12) propres à définir les sièges de logement de récipients (2) individuels à transporter.

6. Appareil selon la revendication 3, **caractérisé en ce que** lesdits premier et second organes de prélèvement et transfert (40, 50) prévoient respectivement un groupe de préhension (41), qui est disposé tournant à pas au niveau de l'extrémité supérieure d'un dispositif de mise en mouvement (51).

7. Appareil selon la revendication 6, **caractérisé en ce que** ledit groupe de préhension (41) est équipé d'une pluralité d'organes de préhension à pince (43) disposés les uns à côté des autres sur un plan horizontal.

8. Appareil selon la revendication 7, **caractérisé en ce que** chaque organe de préhension à pince (43) est constitué d'une paire de mâchoires (44, 45) pivotées sur des pivots (46) avec un axe vertical et actionnés en ouverture et fermeture à travers un dispositif à poussoir (47) commandé au moyen d'une came (48) fixe.

9. Appareil selon la revendication 8, **caractérisé en ce que** lesdites mâchoires (44, 45) sont pivotées sur lesdits pivots (46) à des hauteurs décalées, les mâchoires de chaque organe de préhension à pince (43) étant montées coaxiales sur les pivots (46) des mâchoires des organes de préhensions à pinces (43) adjacents.

10. Appareil selon la revendication 6, **caractérisé en ce que** ledit dispositif de mise en mouvement (51) comprend un arbre tubulaire (52) pour commander la rotation angulaire du groupe de préhension (41), tournant selon un axe vertical et propre à être actionné en rotation à pas, à l'intérieur dudit arbre tubulaire pour commander la rotation angulaire étant monté coaxial, par interposition d'organes de roulement appropriés, un second arbre tubulaire (55) propre à être actionné en rotation et ayant une came mobile (42) sur le sommet pour sélectionner les organes de préhension à pinces (43) à actionner.

11. Appareil selon les revendications 8 et 10, **caractérisé en ce que** ledit second arbre tubulaire (55) est inséré sur un manchon (58), qui a une position angulaire fixe par rapport au cadre de la machine et porte à l'extrémité supérieure ladite came fixe (48).

12. Appareil selon la revendication 11, **caractérisé en ce que** ledit manchon (58) est inséré de façon télescopique sur un arbre (59) pour commander le mouvement vertical dudit groupe de préhension (41), ledit arbre (59) présentant sur sa partie supérieure une portion taraudée, qui est couplée avec une portion à écrou formée intérieurement par ledit manchon (58) et qui peut être actionné en rotation pour opérer ledit mouvement vertical du groupe de préhension (41).

13. Appareil selon la revendication 3, **caractérisé en ce que** ledit organe linéaire de transport (20) est constitué d'un organe flexible (21), qui s'enroule en forme annulaire sur une paire de roues dentées, espacées de façon adéquate et motorisées selon un axe horizontal parallèle et reposant sur un même plan horizontal, et a une série de plaques dentées (22) fixées à l'extérieur, disposées longitudinalement adjacentes, présentant une série d'ouvertures (23) propres à définir les sièges de logement de récipients (2) individuels à transporter.

14. Appareil selon la revendication 3, **caractérisé en ce que** lesdits premier et second organes de prélèvement et transfert (40, 50) prévoient respectivement un groupe de préhension (41), qui est équipé d'un organe de préhension à pince (43) porté par un bras (49) tournant au sommet d'un dispositif de mise en mouvement (51) et propre à être actionné en rotation avec une vitesse contrôlée, de façon à atteindre la même vitesse périphérique que lesdits premier et second organes rotatifs de distribution (10, 30) des récipients (2), et que ledit organe linéaire de transport (20), respectivement durant les étapes de prélèvement et introduction d'un récipient (2) respectif, et de façon à s'arrêter au niveau desdits moyens de pesage (4, 5) durant lesdites étapes de pesage du même récipient (2).
